# EUROPÄISCHE PATENTSCHRIFT

(11) **EP 0 503 532 B1**
(45) Veröffentlichungstag und Bekanntmachung des Hinweises auf die Patenterteilung: **21.12.1994**
(21) Anmeldenummer: 92103993.9
(22) Anmeldetag: 09.03.1992
(51) Int. Cl.: B29D 30/08

(54) **Verfahren und Vorrichtung zum Herstellen von Laufstreifen/Gürtelpaketen für Fahrzeugluftreifen**
Method and apparatus for the fabrication of tread and belt assemblies for vehicle tires
Procédé et dispositif de fabrication de bandes de roulement et de ceintures pour pneumatiques de véhicules

(30) Priorität: 14.03.1991 DE 4108260
(43) Veröffentlichungstag der Anmeldung: 16.09.1992
(73) Patentinhaber: Continental Aktiengesellschaft, 30165 Hannover (DE)
(72) Erfinder: Sergel, Horst, W-3000 Hannover (DE); Glinz, Michael, W-3057 Neustadt 1 (DE)

(56) Entgegenhaltungen:
- EP-A- 0 343 426
- EP-A- 0 414 554

## Beschreibung

Die Erfindung betrifft ein Verfahren zur Herstellung von Laufstreifen/Gürtelpaketen für Fahrzeugluftreifen und eine Vorrichtung zur Durchführung des Verfahrens.

In letzter Zeit sind unterschiedliche Verfahren zur Herstellung von Laufstreifen/Gürtelpaketen unter Verwendung von Gürtelabdecklagen in Form von Wickelbandagen bekanntgeworden. Dabei besteht immer wieder das Problem, daß das Wickeln einer Bandage auf einer Gürteltrommel erheblich mehr Zeit in Anspruch nimmt als das Auflegen der einzelnen Gürtellagen bzw. des Laufstreifens, so daß sich die Taktzeiten erheblich erhöhen. Es sind bereits Verfahren bekannt, bei denen die Arbeitsschritte des Auflegens der Gürtellagen und des Wickelns der Bandage in der Weise entkoppelt worden sind, daß sie gleichzeitig erfolgen können. Hierfür benötigt man bei den bekannten Verfahren jedoch zwei vollständig separate Gürteltrommeln.

Der Erfindung liegt die Aufgabe zugrunde, ein Verfahren der eingangs genannten Art anzugeben, mit dem genügend Laufstreifen/Gürtelpakete auf einer möglichst einfachen Vorrichtung in möglichst kurzer Zeit hergestellt werden können.

Diese Aufgabe wird erfindungsgemäß dadurch gelöst, daß auf einer ersten von zwei auf koaxialen Wellen angeordneten und unabhängig voneinander antreibbaren Gürteltrommeln zumindest zwei Lagen eines Gürtels aufgelegt werden, die von einem Gürtellagenzubringer abgezogen werden, daß das vollständige Gürtellagenpaket mittels einer Überführungsvorrichtung auf die zweite Gürteltrommel übergeben wird, daß auf der zweiten Gürteltrommel durch Spulen einer Wickelbandage und Auflegen eines Laufstreifens ein Laufstreifen/Gürtelpaket vervollständigt wird, während im wesentlichen gleichzeitig auf der ersten Gürteltrommel die Gürtellagen für ein weiteres Gürtelpaket aufgebracht werden und daß schließlich das fertige Laufstreifen/Gürtelpaket mittels einer Überführungsvorrichtung der zweiten Gürteltrommel entnommen wird.

Eine Vorrichtung zur Durchführung des Verfahrens ist dadurch gekennzeichnet, daß die Gürteltrommelanordnung aus zwei auf koaxialen Wellen angeordneten und unabhängig voneinander antreibbaren Gürteltrommeln besteht, daß zum Zuführen und Auflegen von Gürtellagen die erste Gürteltrommel und/oder der Gürtellagenzubringer axial verfahrbar ist, daß zum Spulen einer Wickelbandage und zum Auflegen eines Laufstreifens auf die zweite Gürteltrommel die Wickelbandagenzuführvorrichtung und die Laufstreifenzuführvorrichtung in axialer Richtung auf Höhe der zweiten Gürteltrommel angeordnet sind und daß die Überführungsvorrichtung zum Überführen eines Gürtellagenpakets von der ersten auf die zweite Gürteltrommel und zum Entfernen eines fertigen Laufstreifen/Gürtelpakets von der zweiten Gürteltrommel ausgebildet ist.

Der Kerngedanke der Erfindung besteht darin, auf einer Vorrichtung mit zwei auf koaxialen Wellen angeordneten und unabhängig voneinander antreibbaren Gürteltrommeln die Verfahrensschritte zur Erzeugung eines Laufstreifen/Gürtelpakets in der Weise aufzuteilen, daß auf der ersten Gürteltrommel ein Gürtellagenpaket erzeugt wird, während zu gleicher Zeit auf der zweiten Gürteltrommel die Wickelbandage gespult und zur Vervollständigung des Laufstreifen/Gürtelpakets der Laufstreifen aufgebracht wird. So erhält man den Vorteil einer Verkürzung der Herstellzeit bezogen auf ein einzelnes Laufstreifen/Gürtelpaket. Nach einer ersten bevorzugten Anordnung ist die erste Gürteltrommel in zwei Arbeitspositionen verfahrbar, während in ihrer Nähe ein Gürtellagenzubringer für eine erste und eine zweite Gürtellage ortsfest positioniert ist. Im Bereich der zweiten Gürteltrommel, die bevorzugt axial unverschiebbar ausgebildet ist, befindet sich auf der einen Seite eine Wickelbandagenzuführvorrichtung und auf der anderen Seite eine Laufstreifenzuführvorrichtung. Nach einer zweiten bevorzugten Anordnung ist der Gürtellagenzubringer mit je einem Zuführband für eine erste und eine zweite Gürtellage in Richtung der Achse der ersten Gürteltrommel axial verschiebbar, während die erste Gürteltrommel in Axialrichtung ortsfest angeordnet ist. Eine Überführungsvorrichtung dient zum einen zum Überführen eines Gürtellagenpakets von der ersten Gürteltrommel auf die zweite Trommel und zum Entfernen eines fertigen Laufstreifen/Gürtelpakets von der zweiten Gürteltrommel. Diese beiden Überführungsvorgänge können entweder separat voneinander oder gleichzeitig stattfinden. Entsprechend kann die Überführungsvorrichtung aus zwei separat verschiebbaren Transferringen oder aus einem einheitlich handhabbaren Doppeltransferring bestehen. Vorteilhafte Ausführungen der Erfindung sind den Unteransprüchen zu entnehmen.

Nachfolgend wird ein Ausführungsbeispiel der Erfindung anhand einer Zeichnung näher erläutert.

Es zeigt in einer schematischen Darstellung
- Fig.1: eine Anordnung mit einer axial verfahrbaren ersten Gürteltrommel in einer ersten Betriebsposition und einer axial feststehenden zweiten Gürteltrommel,
- Fig.2: die Anordnung der Fig.1 jedoch mit der ersten Gürteltrommel in der zweiten Betriebsposition,
- Fig.3: die Anordnung der Fig.1 jedoch mit der Überführungsvorrichtung in Übernahmeposition,
- Fig.4: eine Anordnung mit zwei axial feststehenden Gürteltrommeln und mit einem axial verschiebbaren Gürtellagenzubringer.

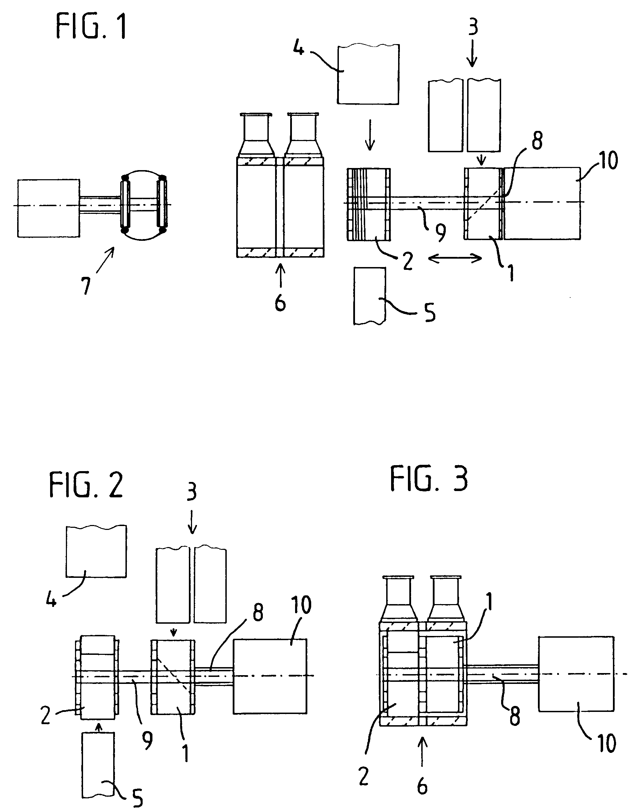

In Fig.1 ist eine Anordnung mit einer ersten Gürteltrommel 1, einer zweiten Gürteltrommel 2, einem Gürtellagenzubringer 3, einer Wickelbandagenzuführvorrichtung 4, einer Laufstreifenzuführvorrichtung 5, einer Überführungsvorrichtung 6 und einer Bombierstation 7 dargestellt. Die Gürteltrommeln 1 und 2, die in üblicher Weise radial expandierbar sind, befinden sich auf Antriebswellen 8 und 9, die koaxial zueinander verlaufen und in einen Motor- und Getriebeblock 10 führen. Die Wellen 8 und 9 verlaufen ebenfalls koaxial zur Welle der Bombierstation 7. In der Nähe der ersten Gürteltrommel 1 befindet sich ein Gürtellagenzubringer 3, der mit zwei Zuführbändern für eine erste Gürtellage und für eine zweite Gürtellage ausgestattet ist. Die erste Gürteltrommel 1 ist axial verschiebbar und befindet sich in Fig.1 in einer ersten Betriebsposition, in der sie auf axialer Höhe mit dem Zuführband für die erste Gürtellage steht. Die erste Gürteltrommel 1 ist in eine zweite Betriebsposition verfahrbar, in der sie dem zweiten Zuführband mit einer zweiten Gürtellage gegenübersteht und gegebenenfalls in eine dritte Betriebsposition zum Überführen eines Gürtelpakets auf die zweite Gürteltrommel 2. Die Überführungsvorrichtung 6 besteht im Beispiel der Fig.1 aus einem Doppeltransferring, der dazu dient, ein Gürtellagenpaket von der ersten Gürteltrommel 1 auf die zweite Gürteltrommel 2 zu bringen und gleichzeitig ein fertiges Laufstreifen/Gürtelpaket von der zweiten Gürteltrommel 2 zu entfernen. Das fertige Laufstreifen/Gürtelpaket wird dann in üblicher Weise der Bombierstation 7 zugeführt, wo das Bombieren einer Karkasse in das Laufstreifen/Gürtelpaket erfolgt.

Auf Höhe der zweiten Gürteltrommel 2 befindet sich auf der einen Seite die Wickelbandagenzuführvorrichtung 4 und auf der anderen Seite die Laufstreifenzuführvorrichtung 5. Die Vorschubgeschwindigkeit der Wickelbandagenzuführvorrichtung 4 beim Spulen einer Wickelbandage auf der zweiten Gürteltrommel 2 wird mit üblichen Mitteln erzeugt.

Nachfolgend wird das erfindungsgemäße Verfahren anhand der Figuren 1 bis 3 näher erläutert. In der ersten Betriebsposition der ersten Gürteltrommel 1 gemäß Fig.1 wird eine erste Gürtellage vom rechten Zuführband des Gürtellagenzubringers 3 abgezogen und auf der Gürteltrommel 1 aufgelegt. Danach wird die erste Gürteltrommel 1 in ihre zweite Betriebsposition axial verfahren, in der nunmehr das Zuführband des Gürtellagenzubringers 3 mit der zweiten Gürtellage der Gürteltrommel 1 gegenübersteht. Hierauf erfolgt das Auflegen der zweiten Gürtellage auf die erste Gürteltrommel 1 mit der bereits aufgelegten ersten Gürtellage. Im Falle von mehr als zwei Gürtellagen werden diese Verfahrensschritte wiederholt bis das Gürtellagenpaket vervollständigt ist. Gleichzeitig mit dem Erzeugen eines Gürtellagenpakets auf der ersten Gürteltrommel 1 erfolgt auf der zweiten Gürteltrommel 2 die Herstellung einer Wickelbandage durch Spulen eines Wickelbandes von der Wickelbandagenzuführvorrichtung 4 und durch Auflegen eines Laufstreifens von der Laufstreifenzuführvorrichtung 5, nachdem vorher bereits ein Gürtelpaket von der ersten Gürteltrommel 1 auf die zweite Gürteltrommel 2 überführt worden ist. Nach der Vervollständigung eines Gürtellagenpakets auf der ersten Gürteltrommel 1 fährt diese an die Gürteltrommel 2 heran (Fig.3) und der Doppeltransferring der Überführungsvorrichtung 6 fährt über die erste Gürteltrommel 1 mit dem Gürtellagenpaket und über die Gürteltrommel 2 mit dem darauf befindlichen fertigen Laufstreifen/Gürtelpaket. Beide Pakete werden von dem Doppeltransferring erfaßt und das Gürtelpaket wird auf der zweiten Gürteltrommel 2 abgelegt, während das fertige Laufstreifen/Gürtelpaket der Bombierstation 7 zugeführt wird. Die erste Gürteltrommel 1 fährt anschließend in ihre erste Betriebsposition zurück und es kann ein neuer Zyklus mit dem Erstellen eines weiteren Gürtellagenpakets auf der ersten Gürteltrommel 1 und mit dem Aufbringen einer Wickelbandage und eines Laufstreifens auf der Gürteltrommel 2 beginnen. Die axiale Anordnung der beiden Gürteltrommeln 1 und 2 kann bei Bedarf auch in der Weise erfolgen, daß die zweite Betriebsposition der ersten Gürteltrommel 1 bereits so weit in der Nähe der zweiten Gürteltrommel 2 liegt, daß in dieser Position das Überführen eines Gürtellagenpakets von der ersten Gürteltrommel 1 auf die zweite Gürteltrommel 2 erfolgt.

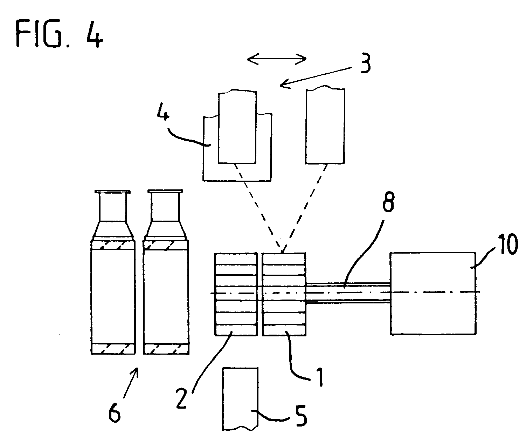

Die Anordnung nach Fig.4 unterscheidet sich von dem zuvor beschriebenen Beispiel dadurch, daß nunmehr der Gürtellagenzubringer mit je einem Zuführband für eine erste und eine zweite Gürtellage in Richtung der Achse der Gürteltrommeln 1, 2 axial verschiebbar ist, während die erste Gürteltrommel 1 wie auch die zweite in Axialrichtung ortsfest angeordnet ist. Zur Erzeugung eines Gürtellagenpakets auf der ersten Gürteltrommel 1 wird der Gürtellagenzubringer 3 in eine Position gefahren, in der das Zuführband mit der ersten Gürtellage der ersten Gürteltrommel 1 gegenübersteht. Nach dem Auflegen der ersten Gürtellage verfährt der Gürtellagenzubringer 3 in seine zweite Position, in der das Zuführband mit der zweiten Gürtellage sich auf Höhe der zweiten Gürteltrommel befindet und es erfolgt das Auflegen der zweiten Gürtellage zur Vervollständigung des Gürtellagenpakets. Während der Erzeugung des Gürtellagenpakets auf der ersten Gürteltrommel 1 erfolgt gleichzeitig wieder auf der Gürteltrommel 2 das Spulen einer Wickelbandage und das anschließende Aufbringen eines Laufstreifens. Im Beispiel der Figur 3 liegt die Überführungsvorrichtung 6 in Form von zwei separat verschiebbaren Transferringen vor, so daß zum einen das Entfernen eines fertigen Laufstreifen/GürtelpaketS von der Gürteltrommel 2 und zum anderen das Überführen eines Gürtellagenpakets von der ersten Gürteltrommel 1 auf die zweite Gürteltrommel 2 unabhängig voneinander erfolgen können, was zu einer zusätzlichen Zeiteinsparung führt. Es kann jedoch selbstverständlich auch hier ein Doppeltransferring zum Einsatz kommen, wenn dies gewünscht wird. Ebenso kann in dem zuerst beschriebenen Beispiel bei Bedarf auch eine Überführungsvorrichtung 6 mit zwei unabhängig voneinander bedienbaren Transferringen zum Einsatz kommen.

## Patentansprüche

1. Verfahren zur Herstellung von Laufstreifen/Gürtelpaketen für Fahrzeugluftreifen, **dadurch gekennzeichnet,** daß auf einer ersten von zwei auf koaxialen Wellen angeordneten und unabhängig voneinander antreibbaren Gürteltrommeln zumindest zwei Lagen eines Gürtels aufgelegt werden, die von einem Gürtellagenzubringer abgezogen werden, daß das vollständige Gürtellagenpaket mittels einer Überführungsvorrichtung auf die zweite Gürteltrommel übergeben wird, daß auf der zweiten Gürteltrommel durch Spulen einer Wickelbandage und Auflegen eines Laufstreifens ein Laufstreifen/Gürtelpaket vervollständigt wird, während im wesentlichen gleichzeitig auf der ersten Gürteltrommel die Gürtellagen für ein weiteres Gürtelpaket aufgebracht werden und daß schließlich das fertige Laufstreifen/Gürtelpaket mittels einer Überführungsvorrichtung der zweiten Gürteltrommel entnommen wird.

2. Verfahren nach Anspruch 1, dadurch gekennzeichnet, daß das Auflegen der ersten Gürtellage bei einem ortsfest angeordneten Gürtellagenzubringer in einer ersten axialen Stellung der ersten Gürteltrommel erfolgt und daß die erste Gürteltrommel zum Auflegen der zweiten Gürtellage in eine zweite axiale Stellung verfahren wird, in der sie einem Zuführband des Gürtellagenzubringers mit der zweiten Gürtellage gegenübersteht.

3. Verfahren nach Anspruch 1 oder 2, dadurch gekennzeichnet, daß das Spulen der Wickelbandage und das anschließende Auflegen eines Laufstreifens auf einer in axialer Richtung unverschiebbaren zweiten Gürteltrommel erfolgt.

4. Verfahren nach Anspruch 1, dadurch gekennzeichnet, daß das Auflegen der ersten und zweiten Gürtellage auf einer in axialer Richtung unverschiebbaren ersten Gürteltrommel erfolgt und daß nach dem Auflegen der ersten Gürtellage der Gürtellagenzubringer axial in eine Stellung verfahren wird, in der das Zuführband mit der zweiten Gürtellage der ersten Gürteltrommel gegenübersteht.

5. Verfahren nach Anspruch 1, dadurch gekennzeichnet, daß das Entnehmen eines fertigen Laufstreifen/Gürtelpakets von der zweiten Gürteltrommel und die Übergabe eines Gürtelpakets von der ersten zur zweiten Gürteltrommel zu unterschiedlichen Zeitpunkten oder gleichzeitig erfolgt.

6. Vorrichtung zur Durchführung des Verfahrens nach Anspruch 1, mit einer Gürteltrommelanordnung, mit einem Gürtellagenzubringer, mit einer Wickelbandagenzuführvorrichtung, mit einer Laufstreifenzuführvorrichtung und mit einer Überführungsvorrichtung, dadurch gekennzeichnet, daß die Gürteltrommelanordnung aus zwei auf koaxialen Wellen (8, 9) angeordneten und unabhängig voneinander antreibbaren Gürteltrommeln (1, 2) besteht, daß zum Zuführen und Auflegen von Gürtellagen die erste Gürteltrommel (1) und/oder der Gürtellagenzubringer (3) axial verfahrbar ist, daß zum Spulen einer Wickelbandage und zum Auflegen eines Laufstreifens auf die zweite Gürteltrommel (2) die Wickelbandagenzuführvorrichtung (4) und die Laufstreifenzuführvorrichtung (5) in axialer Richtung auf Höhe der zweiten Gürteltrommel (2) angeordnet sind und daß die Überführungsvorrichtung (6) zum Überführen eines Gürtellagenpakets von der ersten auf die zweite Gürteltrommel (2) und zum Entfernen eines fertigen Laufstreifen/Gürtelpakets von der zweiten Gürteltrommel (2) ausgebildet ist.

7. Vorrichtung nach Anspruch 6, dadurch gekennzeichnet, daß der Gürtellagenzubringer (3) mit je einem Zuführband für eine erste und eine zweite Gürtellage ortsfest angeordnet ist und daß die erste Gürteltrommel (1) zum Aufnehmen beider Gürtellagen axial verfahrbar ist.

8. Vorrichtung nach Anspruch 6, dadurch gekennzeichnet, daß der Gürtellagenzubringer (3) mit je einem Zuführband für eine erste und eine zweite Gürtellage in Richtung der Achse der ersten Gürteltrommel (1) axial verschiebbar ist, während die erste Gürteltrommel (1) in Axialrichtung ortsfest angeordnet ist.

9. Vorrichtung nach Anspruch 6, dadurch gekennzeichnet, daß die Überführungsvorrichtung (6) aus zwei separat verschiebbaren Transferringen oder aus einem einheitlich verschiebbaren Doppeltransferring besteht.

## Claims

1. Method of producing bundles of tread strips/belts for pneumatic vehicle tyres, characterised in that at least two plies of a belt are applied to a first belt drum of two belt drums, which are disposed on coaxial shafts and are drivable independently of each other, which plies are withdrawn from a belt ply feeder, in that the complete bundle of belt plies is transferred to the second belt drum by means of a transer device, in that a bundle of tread strips/belts is completed on the second belt drum by winding a helical bandage and applying a tread strip, while the belt plies for an additional bundle of belts are applied substantially simultaneously to the first belt drum, and finally in that the finished bundle of tread strips/belts is removed from the second belt drum by means of a transfer device.

2. Method according to claim 1, characterised in that the first belt ply is applied when the belt ply feeder is disposed in a stationary manner and when the first belt drum is in a first axial position, and in that, in order to apply the second belt ply, the first belt drum is displaced into a second axial position, in which it lies opposite a conveyor belt of the belt ply feeder provided with the second belt ply.

3. Method according to claim 1 or 2, characterised in that the helical bandage is wound, and a tread strip is subsequently applied to a second belt drum, which is non-displaceable in the axial direction.

4. Method according to claim 1, characterised in that the first and second belt plies are applied to a first belt drum, which is non-displaceable in the axial direction, and in that, after the first belt ply has been applied, the belt ply feeder is axially displaced into a position in which the conveyor belt lies opposite the first belt drum with the second belt ply.

5. Method according to claim 1, characterised in that a finished bundle of tread strips/belts is removed from the second belt drum and a bundle of belts is transferred from the first belt drum to the second belt drum at different times or simultaneously.

6. Device for accomplishing the method according to claim 1, having a belt drum arrangement, a belt ply feeder, a helical bandage feed device, a tread strip feed device and a transfer device, characterised in that the belt drum arrangement comprises two belt drums (1, 2), which are disposed on coaxial shafts (8, 9) and are drivable independently of each other, in that the first belt drum (1) and/or the belt ply feeder (3) are/is axially displaceable for feeding and applying belt plies, in that the helical bandage feed device (4) and the tread strip feed device (5) are disposed on a level with the second belt drum (2), when viewed with respect to the axial direction, in order to wind a helical bandage and apply a tread strip to the second belt drum (2), and in that the transfer device (6) is provided in order to transfer a bundle of belt plies from the first belt drum to the second belt drum (2) and in order to remove a finished bundle of tread strips/belts from the second belt drum (2).

7. Device according to claim 6, characterised in that the belt ply feeder (3) is disposed in a stationary manner and has a respective conveyor belt for a first belt ply and a second belt ply, and in that the first belt drum (1) is axially displaceable for receiving both belt plies.

8. Device according to claim 6, characterised in that the belt ply feeder (3), having a respective conveyor belt for a first belt ply and a second belt ply, is axially displaceable in the direction of the axis of the first belt drum (1), while the first belt drum (1) is disposed so as to be stationary in the axial direction.

9. Device according to claim 6, characterised in that the transfer device (6) comprises two separately displaceable transfer rings or one uniformly displaceable double transfer ring.

## Revendications

1. Procédé de fabrication de bandes de roulement/ceintures pour pneumatiques de véhicules, caractérisé en ce que sur un premier de deux tambours de ceinture, montés sur des arbres coaxiaux et entraînés indépendamment l'un de l'autre, sont déposées au moins deux couches d'une ceinture, qui sont dévidées d'une alimentation de couches de ceinture, en ce que le paquet de couches de ceinture complet est transféré au moyen d'un dispositif de transfert sur le second tambour de ceinture, en ce que sur le second tambour de ceinture est complété un paquet bande de roulement/ceinture, par enroulement d'un bandage et pose d'une bande de roulement, tandis qu'à peu près simultanément les couches de ceinture sont appliquées sur le premier tambour de ceinture pour un autre paquet de ceinture et en ce qu'enfin l'ensemble bande de roulement/paquet de ceinture fini est prélevé du second tambour de ceinture, au moyen d'un dispositif de transfert.

2. Procédé selon la revendication 1, caractérisé en ce que la pose de la première couche de ceinture, dans le cas d'une alimentation de couches de ceinture fixe, s'effectue dans une première position axiale du premier tambour et en ce que le premier tambour est déplacé, pour la mise en place de la seconde couche de ceinture, dans une seconde position axiale dans laquelle il se trouve face à un tapis d'alimentation de l'alimentation de couches de ceinture avec la seconde couche de ceinture.

3. Procédé selon les revendications 1 ou 2, caractérisé en ce que l'enroulement du bandage et la pose successive d'une bande de roulement s'effectuent sur un second tambour de ceinture, non déplaçable axialement.

4. Procédé selon la revendication 1, caractérisé en ce que la pose de la première et de la seconde couche de ceinture s'effectue sur un premier tambour, non déplaçable axialement, et en ce qu'après pose de la première couche de ceinture, l'alimentation des couches de ceinture est déplacée axialement dans une position dans laquelle le tapis d'alimentation avec la seconde couche de ceinture, fait face au premier tambour.

5. Procédé selon la revendication 1, caractérisé en ce que le prélèvement d'un ensemble bande de roulement/paquet de ceinture fini du second tambour et le transfert d'un paquet de ceinture du premier au second tambour de ceinture s'effectuent à des instants différents ou simultanément.

6. Dispositif pour la mise en oeuvre du procédé selon la revendication 1 comportant un ensemble de tambours de ceinture, avec une alimentation de couches de ceinture, avec un dispositif d'alimentation de bandage, avec un dispositif d'alimentation de bande de roulement et avec un dispositif de transfert, caractérisé en ce que l'ensemble de tambours de ceinture est constitué de deux tambours (1, 2) montés sur deux arbres (8, 9) coaxiaux et entraînés indépendamment l'un de l'autre, en ce que pour alimenter et poser les couches de ceinture, le premier tambour (1) et/ou l'alimentation de couches de ceinture (3) sont déplaçables axialement, en ce que pour enrouler un bandage et pour poser une bande de roulement sur le second tambour 2, le dispositif d'alimentation de bandage (4) et le dispositif d'alimentation de bande de roulement (5) sont montés dans une direction axiale à hauteur du second tambour (2) et en ce que le dispositif de transfert (6) est conçu pour transférer un paquet de couches de ceinture du premier au second tambour (2) et pour enlever un ensemble bande de roulement/paquet de ceintures fini du second tambour (2).

7. Dispositif selon la revendication 6, caractérisé en ce que l'alimentation de couches de ceinture (3) est montée fixe avec un tapis d'alimentation pour une première et une seconde couche de ceinture et en ce que le premier tambour (1) destiné à recevoir les deux couches de ceinture, est déplaçable axialement.

8. Dispositif selon la revendication 6, caractérisé en ce que l'alimentation des couches de ceinture (3) avec un tapis d'alimentation pour une première couche et un tapis d'alimentation pour une seconde couche de ceinture est déplaçable axialement en direction de l'axe du premier tambour (1), tandis que le premier tambour (1) est monté fixe axialement.

9. Dispositif selon la revendication 6, caractérisé en ce que le dispositif de transfert (6) est constitué de deux anneaux de transfert déplaçables séparément ou d'un anneau de transfert double, déplaçable d'un bloc.
